# EUROPÄISCHE PATENTSCHRIFT

(11) **EP 0 728 588 B1**
(45) Veröffentlichungstag und Bekanntmachung des Hinweises auf die Patenterteilung: **21.01.1998**
(21) Anmeldenummer: 96101682.1
(22) Anmeldetag: 06.02.1996
(51) Int. Cl.: B41J 5/10

(54) **Ergonomische Tastatur**
Ergonomic keyboard
Clavier ergonomique

(30) Priorität: 21.02.1995 DE 19505907
(43) Veröffentlichungstag der Anmeldung: 28.08.1996
(73) Patentinhaber: Siemens Nixdorf Informationssysteme AG, 33106 Paderborn (DE)
(72) Erfinder: Gut, Bernhard, Dipl.-Ing. (FH), D-86551 Aichach (DE)
(74) Vertreter: Fuchs, Franz-Josef, Dr.-Ing.

(56) Entgegenhaltungen:
- DE-A- 4 108 096

## Beschreibung

Die Erfindung betrifft eine ergonomische Tastatur gemäß den Merkmalen des Oberbegriffs des Anspruchs 1 (siehe z.B. DE-A-4 108 096).

Ergonomische Tastaturen sind vielfach so gestaltet, daß zwei getrennte bzw. trennbare Tastenfelder in einem zur Bedienungsperson offenen Winkel angeordnet sind, wobei zusätzlich auch noch eine laterale, d.h. dachförmige Neigung der beiden Tastenfelder in Betracht kommen kann. Neben Tastaturen mit einer "starren" Zuordnung der beiden Tastenfelder sind auch bereits Tastaturen bekannt, bei denen die beiden Tastenfelder sowohl in ihrer flügelartigen Aufspreizung als auch in ihrer lateralen Neigung in einer mehr oder weniger großen Variationsbreite auf die individuellen Bedürfnisse des jeweiligen Benutzers eingestellt werden können.

Der vorliegenden Erfindung liegt nun die Aufgabe zugrunde, eine ergonomische Tastatur der eingangs genannten Art so zu gestalten, daß die flügelartige Aufspreizung der beiden Tastenfelder möglichst einfach und in einem synchronen Bewegungsablauf erreicht werden kann.

Die Lösung dieser Aufgabe ergibt sich erfindungsgemäß durch die Merkmale des Anspruchs 1. Vorteilhafte Weiterbildungen der Erfindung ergeben sich durch die Merkmale der Unteransprüche.

Im folgenden wird ein Ausführungsbeispiel der Erfindung anhand der Zeichnung näher erläutert. Dabei zeigen
Figur 1 eine erfindungsgemäße Tastaturanordnung in der Grundstellung, von unten gesehen,
Figur 2 die Anordnung nach Figur 1 bei flügelartig aufgespreizten Tastenfeldern,
Figur 3 eine Schnittdarstellung längs der Schnittlinie III-III in Figur 1.

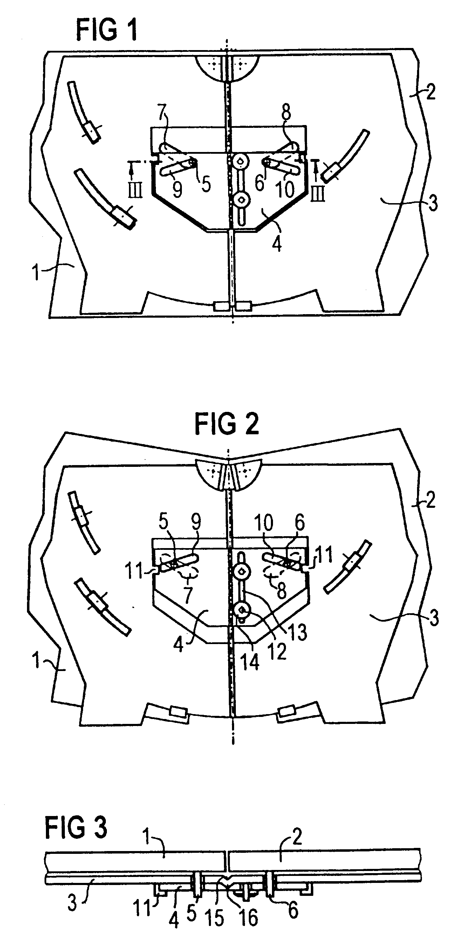

Die Figur 1 zeigt den prinzipiellen Aufbau einer aus zwei Tastaturteilgehäusen 1,2 bestehenden ergonomischen Tastatur mit einer auf beide Tastaturteilgehäuse 1,2 übergreifenden Stützscheibe 3. Beide Tastaturteilgehäuse sind in einem Drehpunkt schwenkbar gelagert, derart, daß sie symmetrisch zur Trennlinie zwischen den beiden Gehäusen flügelartig aufspreizbar sind. An der Unterseite der Stützscheibe 3 ist eine, bezogen auf den Drehpunkt in radialer Richtung zwangsgeführte Gleitplatine 4 vorgesehen. Ferner ist an der der Stützscheibe 3 zugewandten Unterseite der beiden Tastaturteilgehäuse 1,2 je ein sowohl die Stützscheibe 3 als auch die Gleitplatine 4 durchdringender Führungsstift 5,6 vorgesehen. Im Hinblick auf die Schwenkmöglichkeit der beiden Tastaturteilgehäuse sind die die Führungsstifte 5,6 aufnehmenden Öffnungen 7,8 in der Stützscheibe 3 als der Schwenkbewegung folgende Kreisbogenabschnitte und die Öffnungen 9,10 in der Gleitplatine 4 als quer zu den kreisbogenförmigen Öffnungen 7,8 verlaufende Längsschlitze ausgebildet.

Bei einer flügelartigen Aufspreizung der beiden Tastaturteilgehäuse 1,2 wandert nun beispielsweise der Führungsstift 5, ausgehend von der in Figur 1 dargestellten Grundstellung, entlang der Öffnung 7 kreisbogenförmig nach außen. Dabei wird, wie aus Figur 2 ersichtlich, die Gleitplatine (4) durch den längs der Öffnung 9 ebenfalls nach außen wandernden Führungsstift 5 nach oben geschoben. Dies führt auf der Seite des anderen Tastaturteilgehäuses 2 dazu, daß die nach oben geschobene Gleitplatine 4 den Führungsstift 6 längs der Öffnung 10 nach außen drückt mit der Folge, daß das Teilgehause 2 die Schwenkbewegung des Teilgehäuses 1 automatisch mitmacht.

Die Figur 2 zeigt die Tastatur in weitgehend aufgespreiztem Zustand der beiden Tastaturteilgehäuse 1,2. Die über Haltehaken 11 an den Außenrändern gesicherte Gleitplatine 4 wird zusätzlich noch im mittleren Bereich lösbar befestigt und zwar durch wenigstens einen an der Stützscheibe 3 befestigten Sicherungsstift 12, der in einen parallel zur Bewegungsrichtung der Gleitplatine 4 verlaufenden Führungsschlitz 13 eintaucht, wobei die Gleitplatine 4 mittels einer auf den Sicherungsstift 2 aufgesetzten Sicherungsscheibe 14 an die Stützscheibe 3 angedrückt wird.

Die Figur 3 zeigt die Anordnung längs der Schnittlinie III-III in Figur 2. Die Schnittdarstellung zeigt den prinzipiellen Aufbau einer ergonomischen Tastatur, bei der die auf einer gemeinsamen Stützscheibe 3 gelagerten Tastaturteilgehäuse 1,2 nicht nur flügelartig aufspreizbar sind, sondern zusätzlich mittels eines in der Stützscheibe 3 im Bereich der Trennlinie zwischen den beiden Tastaturteilgehäusen 1,2 vorgesehenen scharnierartigen Gelenks 15 in wenigstens einem lateralen Neigungswinkel einstellbar sind. Dementsprechend muß auch die Gleitplatine 4 mit einem deckungsgleich zum Gelenk 15 angeordneten Gelenk 16 versehen sein.

## Patentansprüche

1. Ergonomische Tastatur mit zwei getrennten auf einer gemeinsamen Stützscheibe um einen Drehpunkt schwenkbar gelagerten, jeweils einem Tastaturfeld zugeordneten Teilgehäusen,
**dadurch gekennzeichnet,** daß an der Unterseite der Stützscheibe (3) eine, bezogen auf den Drehpunkt in radialer Richtung zwangsgeführte Gleitplatine (4) vorgesehen ist, daß an der der Stützscheibe (3) zugewandten Unterseite der beiden Tastaturteilgehäuse (1,2) je ein die Stützscheibe (3) und die Gleitplatine (4) durchdringender Führungsstift (5,6) vorgesehen ist und daß die die Führungsstifte (5,6) aufnehmenden Öffnungen (7,8) in der Stützscheibe (3) als der Schwenkbewegung folgende Kreisbogenabschnitte und die Öffnungen (9,10) in der Gleitplatine (4) als quer zum jeweiligen Kreisbogenabschnitt verlaufender Längsschlitz ausgebildet sind.

2. Ergonomische Tastatur nach Anspruch 1,
**dadurch gekennzeichnet,** daß die Gleitplatine (4) einen parallel zur Bewegungsrichtung der Gleitplatine (4) verlaufenden Führungsschlitz für wenigstens einen an der Stützscheibe (3) befestigten Sicherungsstift (12) aufweist.

3. Ergonomische Tastatur nach Anspruch 1 oder 2,
**dadurch gekennzeichnet,** daß die Gleitplatine (4) an den parallel zur Bewegungsrichtung verlaufenden Außenkanten durch auf die Gleitplatine (4) übergreifende Haltehaken (11) gesichert ist.

4. Ergonomische Tastatur nach einem der vorhergehenden Ansprüche,
**dadurch gekennzeichnet,** daß die Stutzscheibe (3) im Bereich der Trennlinie zwischen den beiden Tastaturteilgehäusen (1,2) ein scharnierartiges Gelenk (15) aufweist und daß in der Gleitplatine (4) ein entsprechendes, deckungsgleich angeordnetes Gelenk vorgesehen ist.

## Claims

1. Ergonomic keyboard having two separate partial housings which are mounted on a supporting plate such that they can swivel about a pivot point and are in each case assigned to an array of keys, characterized in that on the underside of the supporting plate (3) there is provided a sliding plate (4) which is restrictedly guided in the radial direction with respect to the pivot point, in that on the underside of the two partial keyboard housings (1, 2), facing the supporting plate (3), there is in each case provided a guide pin (5, 6) which penetrates the supporting plate (3) and the sliding plate (4) and in that the openings (7, 8) in the supporting plate (3), receiving the guide pins (5, 6), are designed as arcs of a circle following the swivelling movement and the openings (9, 10) in the sliding plate (4) are designed as an elongated slot running transversely with respect to the respective arc.

2. Ergonomic keyboard according to Claim 1, characterized in that the sliding plate (4) has a guide slot, running parallel to the direction of movement of the sliding plate (4), for at least one securing pin (12) fastened on the supporting plate (3).

3. Ergonomic keyboard according to Claim 1 or 2, characterized in that the sliding plate (4) is secured at the outer edges, running parallel to the direction of movement, by retaining hooks (11) reaching over the sliding plate (4).

4. Ergonomic keyboard according to one of the preceding claims, characterized in that the supporting plate (3) has a hinge-like joint (15) in the region of the parting line between the two partial keyboard housings (1, 2) and in that a corresponding, congruently arranged joint is provided in the sliding plate (4).

## Revendications

1. Clavier ergonomique comprenant deux boîtiers parties séparés montés pivotant autour d'un pôle de rotation sur une plaque d'appui commune, qui sont associés chacun à une zone du clavier,
caractérisé en ce qu'il est prévu, sur la face inférieure de la plaque d'appui (3), une platine de glissement (4) guidée de façon forcée dans la direction radiale par rapport au pôle de rotation, en ce qu'il est prévu, sur la face inférieure de chacun des deux boîtiers parties (1, 2) du clavier qui est dirigée vers la plaque d'appui (3), une broche de guidage (5, 6) qui traverse la plaque d'appui (3) et la platine de glissement (4) et en ce que les ouvertures (7, 8) dans la plaque d'appui (3) qui reçoivent les broches de guidage (5, 6) sont formées en tant que segments d'arcs de cercle qui suivent le mouvement de pivotement, et les ouvertures (9, 10) dans la platine de glissement (4) sont formées chacune en tant que fente longitudinale s'étendant transversalement au segment d'arc de cercle correspondant.

2. Clavier ergonomique selon la revendication 1,
caractérisé en ce que la platine de glissement (4) présente une fente de guidage s'étendant parallèlement à la direction du mouvement de la platine de glissement (4), pour au moins une broche d'arrêt (12) fixée à la plaque d'appui (3).

3. Clavier ergonomique selon la revendication 1 ou 2,
caractérisé en ce que la platine de glissement (4) est retenue aux bords extérieurs s'étendant parallèlement à la direction du mouvement par des crochets de retenue (11) qui mordent sur la platine de glissement (4).

4. Clavier ergonomique selon l'une des revendications précédentes,
caractérisé en ce que la plaque d'appui (3) présente une articulation (15) du type charnière dans la région de la ligne de séparation entre les deux boîtiers parties (1, 2) du clavier, et en ce qu'il est prévu dans la platine de glissement (4) une articulation correspondante, disposée en coïncidence.
